# DEMANDE DE BREVET EUROPEEN

(11) **EP 2 042 776 A1**
(43) Date de publication de la demande: **01.04.2009**
(21) Numéro de dépôt: 08164603.6
(22) Date de dépôt: 18.09.2008
(51) Int. Cl.: F16H 61/24, F16H 63/38

(54) **Système de billage multifonction pour boîte de vitesses de véhicules automobiles**

(30) Priorité: 26.09.2007 FR 0757879
(71) Demandeur: PEUGEOT CITROËN AUTOMOBILES SA, 78140 Vélizy Villacoublay (FR)
(72) Inventeur: Aleksander, Boris, 91400, ORSAY (FR)

(57) **Abrégé**

La présente invention se rapporte à un système de billage multifonction de boîte de vitesses pour véhicules automobiles. Dans l'invention, le système de billage est essentiellement caractérisé par le fait que le profil de billage (30) présente un profil secondaire guidant les mouvements du profil de billage (30) lors des mouvements de passages de vitesses. L'invention trouve une application immédiate dans le domaine des véhicules automobiles.

## Description

La présente invention concerne un système de billage multifonction pour boîte de vitesses de véhicules automobiles. L'invention concerne plus particulièrement un billage destiné à être intégré dans une boîte de vitesses manuelle. Elle a essentiellement pour but d'améliorer l'agrément de manipulation du pommeau lors de la sélection ou du passage des rapports de vitesses.

Le domaine de l'invention est d'une façon générale celui des boîtes de vitesses manuelles. Celles-ci permettent d'adapter le couple moteur aux variations de résistance dues à l'avancement du véhicule.

Une boîte de vitesses est composée notamment :
- d'un levier de passage/sélection à commande manuelle. Cet organe est commandé en translation et en rotation par l'utilisateur. La translation correspond à un mouvement dit de sélection et la rotation correspond à un mouvement dit de passage ;
- d'un fourreau de passage lié en translation et en rotation avec le levier de passage/sélection ;
- d'un doigt de passage lié en translation et rotation avec le levier de passage/sélection. Le doigt de passage peut comporter des chemins de guidage déterminant les déplacements du levier de passage/sélection. Ces chemins de passage forment alors un modèle qui définit la grille de la boîte de vitesses. Le tracé et les directions des chemins de guidage de la grille déterminent directement les possibilités de mouvement du levier de passage ;
- d'un pion de grille fixé au bâti de la boîte de vitesses. Le pion de grille pénètre dans la grille pour limiter les mouvements du doigt de passage, et donc du levier de passage/sélection. Le pion de grille est en butée sur la grille lorsque le mouvement de sélection ou de passage arrive à son terme;
- d'un profil de billage lié en translation et rotation au doigt de passage. Le profil de billage est une pièce tridimensionnelle permettant de ressentir un agrément de manipulation du levier passage/sélection par l'utilisateur.

Ainsi de façon classique, la fonction de guidage pour réaliser les mouvements de sélection et de passage de vitesses est assuré par la grille du doigt de passage. L'agrément de manipulation est créé par le profil de billage.

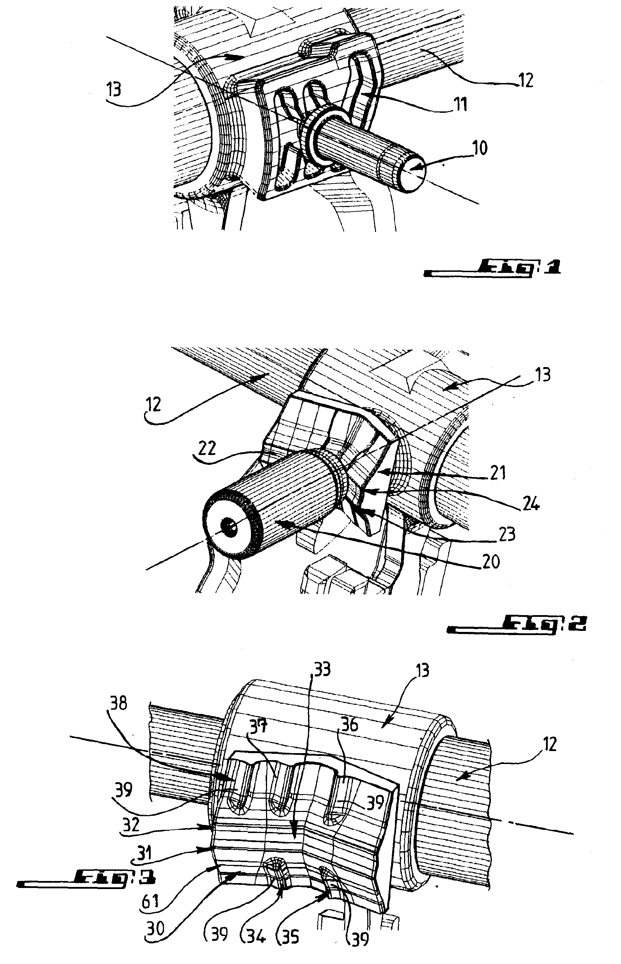

Les figures 1 et 2 montrent plus en détail respectivement une grille de boîte de vitesse et un système de billage.

Sur la figure 1, on a représenté :
- un pion de grille 10 pénétrant dans une grille 11. Le pion de grille 10 est fixe dans le bâti de la boîte de vitesses et limite le déplacement d'un doigt de passage 13 en arrivant en butée dans la grille 11. La grille 11 a pour fonction l'amélioration du guidage du levier passage/sélection en modifiant et en limitant un parcours qu'aurait pu suivre le levier de passage/sélection si la grille n'était pas présente. On augmente ainsi la sensation de précision et on réduit un jeu existant lorsqu'une vitesse est enclenchée.
- un fourreau de passage 12 lié en translation et rotation avec le doigt de passage 13.

Sur la figure 2, on a représenté un profil de billage 21 avec une douille de billage 20 définissant une loi course/effort lors de la manipulation du levier de passage/sélection.

La douille de billage 20 est typiquement composée d'un corps le plus souvent cylindrique creux, d'un ressort et d'une bille. La bille se déplace dans le corps suivant un mouvement de translation. Le ressort exerce un effort de compression sur la bille. Sa fonction essentielle est le maintien d'un certain effort par le biais de la bille et du ressort sur le profil de billage 21.

Le profil de billage 21 est tridimensionnel. Il détermine l'effort perçu par l'utilisateur au travers du levier de passage/sélection. Une courbe course/effort est modélisée tri-dimensionnellement sur chaque profil de billage. Le profil de billage 21 présente au moins deux profils distincts :
- Un profil principal 22, dit profil en V, nécessaire au rappel du profil de billage lors d'un mouvement de sélection.
- Un profil latéral, dit profil à deux bosses 23 et 24, intervenant dans le ressenti des passages de vitesses.

Dans tous les cas, c'est la grille et/ou le profil de billage qui sont en mouvement, lors de la sélection ou du passage de vitesses, en étant en contact respectivement avec le pion de grille et la douille de billage.

Dans l'état de la technique, il existe des fourreaux de passages supportant un doigt de passage avec une grille du type de celle représentée à la figure 1. Il existe également des fourreaux de passages supportant un doigt de passage avec un profil de billage. Il existe enfin des fourreaux de passages supportant à la fois une grille et un profil de billage.

Ces solutions ne sont pas totalement satisfaisantes. Lorsque le fourreau de passage supporte une grille coopérant avec un doigt de passage, ou un profil de billage coopérant avec une douille de billage, la fonction assurée par l'autre élément n'est pas assurée. Quand un fourreau de passage supporte à la fois une grille et un profil de billage, ces deux éléments sont situés de part et d'autre du doigt de passage. Cela occasionne une fabrication du doigt de passage assez complexe ; le coût de réalisation est relativement important du fait de l'utilisation de plusieurs pièces ; l'encombrement du doigt de passage n'est pas optimisé.

L'objet de l'invention propose une solution aux problèmes qui viennent d'être exposés.

L'invention concerne ainsi un système de billage multifonction de boîte de vitesses pour véhicule automobile, ledit système de billage comportant :
- un profil de billage déterminant une loi course/effort lors d'une opération de sélection ou lors d'une opération de passage d'une vitesse ;
- une douille de billage, comprenant un corps fixe et une bille de guidage, le profil de billage évoluant sous la bille de guidage en subissant une pression lors du passage ou de la sélection d'une vitesse ;
caractérisé en ce que le profil de billage présente un profil secondaire guidant les mouvements du profil de billage lors des mouvements de passages de vitesses.

Outre les caractéristiques principales qui viennent d'être mentionnées dans le paragraphe précédent, le système de billage selon l'invention peut présenter une ou plusieurs caractéristiques supplémentaires parmi les suivantes :
- le profil de billage comporte un profil principal en V apte à remplir une fonction de rappel du profil de billage ayant effectué un mouvement de sélection ;
- la forme du profil principal en V du profil de billage est sensiblement conservée pour toute coupe du profil secondaire perpendiculaire à la direction du mouvement de passage ;
- le profil de billage présente un profil latéral comportant un premier bossage et un deuxième bossage disposé de part et d'autre d'une zone centrale du profil de billage au niveau de laquelle la bille de guidage évolue lors des mouvements de sélection ;
- le profil secondaire présente au moins un couloir de passage de vitesse perpendiculaire à la direction du mouvement de sélection ;
- le profil secondaire présente au moins une zone protubérante longeant chaque couloir de passage de vitesse ;
- pour plusieurs vitesses passées, la bille de guidage de la douille de billage est positionnée dans un des couloirs de passage de vitesse, ledit couloir étant entouré de deux zones protubérantes.
- les zones protubérantes apparaissent progressivement, en considérant le sens du mouvement de passage, sur le profil de billage ;
- chaque zone protubérante présente un flanc extérieur dont la pente est équivalente à la pente d'un flanc du profil principal en V, ledit flanc du profil principal en V ne supportant pas le bossage considéré.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention, et dans lesquels :
- la figure 1, déjà décrite, est une représentation d'une grille de boîte de vitesses ;
- la figure 2, déjà décrite, est une représentation d'un profil de billage avec une douille de billage définissant une loi course/effort lors de la manipulation du levier de passage/sélection ;
- la figure 3 est une vue générale d'un ensemble de système de billage comprenant un profil de billage selon l'invention ;
- la figure 4 est une représentation de la vue de face d'un profil de billage représenté sur la figure 3 ;
- la figure 5A illustre la coupe du profil de billage suivant une première section visible A-A sur la figure 4 ;
- la figure 5B est une représentation de la coupe du profil de billage suivant une deuxième section visible B-B sur la figure 4 ;
- la figure 5C est une représentation de la coupe du profil de billage suivant une troisième section visible C-C sur la figure 4;
- la figure 6 est une représentation en vue de face d'un profil latéral de profil de billage.

Les différents éléments apparaissant sur plusieurs figures auront gardé, sauf précision contraire, la même référence. Les notions de direction et de position, de type "haut", "bas"', "gauche"', "droite"',... sont mentionnées dans des conditions classiques de disposition des différents éléments concernés lorsqu'ils sont mis en place dans un système de billage d'une boîte de vitesses de véhicule automobile.

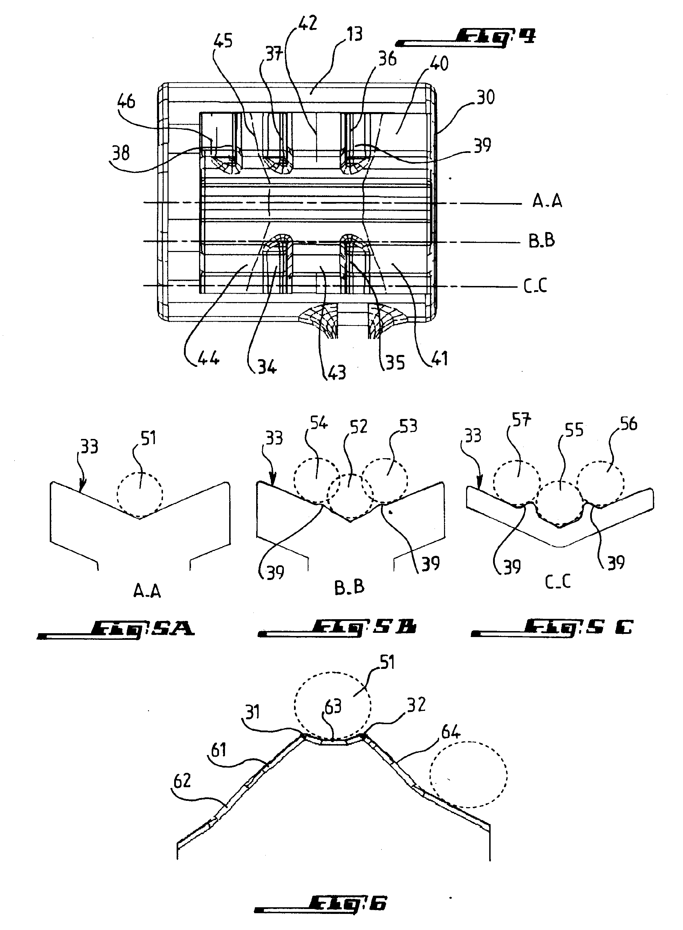

La figure 3 est une représentation tridimensionnelle en perspective d'une partie d'un système de billage selon l'invention, pour boîte de vitesses manuelles de véhicules automobiles. Ledit système comporte dans cette représentation :
- un doigt de passage 13 solidaire d'un fourreau de passage non représenté ;
- un profil de billage 30 solidaire du doigt de passage 13, ledit profil de billage 30 présentant trois profils distincts définissant trois fonctions différentes :
   - un profil principal en V 33, visible notamment à la figure 4, qui remplit la fonction de rappel de la bille de guidage dans une position d'équilibre correspondant à la position de point mort, lorsqu'un mouvement de sélection est réalisé et que le pommeau est relâché sans mouvement de passage de vitesse ;
   - un profil latéral 61, visible essentiellement à la figure 6, présentant un premier bossage 31 et un deuxième bossage 32 qui permet de ressentir l'engagement d'une vitesse ;
   - un profil secondaire présentant des zones protubérantes 34, 35, 36, 37 et 38, au nombre de cinq dans l'exemple représenté, présentes de part et d'autre du profil principal en V 33.

La figure 4 montre le profil de billage 30 monté sur le doigt de passage 13 en représentation de face. La représentation permet de distinguer plus clairement la formation de couloirs 40, 41, 42, 43, 44, 45, 46 entre les zones protubérantes 34, 35, 36, 37, 38, créant un guidage comparable à celui créé par une grille. Les zones protubérantes 34, 35, 36, 37, 38, croissent progressivement lorsque le profil de billage 30 subit un déplacement vers le haut ou vers le bas, c'est-à-dire lorsqu'un mouvement de passage est réalisé. Pour mieux comprendre et visualiser l'apparition des zones protubérantes 34, 35, 36, 37, 38, trois sections selon des plans radiaux par rapport au fourreau, sont réalisées caractérisant trois états d'un mouvement de passage du système de billage.

La section suivant les repères A-A, caractérise un positionnement de la bille de guidage en position point mort. Dans cette position un mouvement de sélection est possible si besoin, avant un mouvement de passage.

La section suivant les repères B-B, caractérise un positionnement de la bille de guidage en position dite de début de grille. Dans cette position, un mouvement de sélection est encore possible à réaliser. Cependant, le choix du couloir de sélection est généralement entériné (le mouvement de passage a déjà commencé et on n'en change plus) dans cette position de début de grille. Le mouvement de passage est amorcé.

La section suivant les repères C-C, caractérise le positionnement de la bille en position vitesse engagée. Dans cette position, les zones protubérantes guident le mouvement autour de la bille de guidage. De ce fait, le mouvement de sélection n'est plus possible. Le choix du couloir de sélection est totalement entériné dans cette position (le mouvement de passage a déjà commencé et on n'en change plus) dans cette position.

La figure 5A illustre la section du profil de billage suivant les repères A-A de la figure 4. La section correspond au positionnement de la bille de guidage en position point mort. Dans la position point mort aucun mouvement de sélection ou de passage de vitesses n'est encore engagé. La bille de guidage se trouve alors centrée selon une position 51, sur la droite représentant la bissectrice de l'angle formé par les deux pentes du profil principal en V 33 qui remplit la fonction de rappel du profil de billage. Les deux pentes du profil principal en V 33 ont un coefficient directeur opposé et se prolongent jusqu'aux limites du profil de billage 30.

La figure 5-B illustre la section du profil de billage suivant les repères B-B de la figure 4. La section correspond au positionnement de la bille de guidage en position dite de début de grille. Le mouvement de passage est amorcé. Suivant le mouvement de sélection choisi avant la position de début de grille, trois cas de positionnement de la bille de guidage sont possibles. Les cas illustrés sur cette figure sont :
- pas de mouvement de sélection ; la bille de guidage, dans une première position 52, est centrée sur la droite représentant la bissectrice de l'angle formé par les deux pentes du profil principal en V 33.
- mouvement de sélection à droite ; la bille de guidage, dans une deuxième position 53, est guidée vers un flanc extérieur 39 droit, d'une des zones protubérante 34, 35, 36, 37, 38 ;
- mouvement de sélection à gauche ; la bille de guidage, dans une troisième position 54, est guidée vers le flanc extérieur 39 gauche, d'une des zones protubérantes 34, 35, 36, 37, 38 ;

Dans les deux dernières positions 53 et 54 de la bille de guidage, les zones protubérantes 34, 35, 36, 37, 38, sont peu marquées afin de débuter le guidage sans à-coups de la bille de guidage vers un des couloirs 40, 41, 42, 43, 44, 45, 46.

La figure 5-C illustre la section du profil de billage suivant les repères C-C de la figure 4. La section correspond au positionnement de la bille de guidage en position vitesse engagée. Le choix du couloir de sélection est totalement entériné dans cette position. Suivant le mouvement de sélection choisi avant le mouvement de passage, trois cas de positionnement de la bille de guidage sont possibles. Les cas illustrés sur cette figure sont :
- pas de mouvement de sélection ; la bille de guidage, dans une position 55 est centrée sur la droite représentant la bissectrice de l'angle formé par les deux pentes du profil principal en V 33.
- mouvement de sélection à droite ; la bille de guidage, dans une position 56 est guidé vers le flanc extérieur 39 droit d'une des zones protubérantes 34, 35, 36, 37, 38 ;
- mouvement de sélection à gauche ; la bille de guidage, dans une position 57 est guidée vers le flanc extérieur 39 gauche d'une des zones protubérantes 34, 35, 36, 37, 38 ;

Dans les deux dernières positions 56 et 57 des billes de guidage, les zones protubérantes 34, 35, 36, 37, 38 sont très marquées dans le but de guider et de maintenir en position la bille de billage dans un des couloirs 40, 41, 42, 43, 44, 45, 46. Le flanc extérieur 39 des zones protubérantes 34, 35, 36, 37, 38 forme une pente de même valeur que la pente du profil principal en V 33. Les efforts mécaniques sont ainsi répartis de manière homogène sur les deux points de contacts en annulant les efforts radiaux.

La figure 6 illustre le profil latéral 61 du profil de billage 30 dans le sens de passage. Le profil latéral 61 présente, de gauche à droite, une partie croissante 62, un premier bossage 31, une partie creuse arrondie 63 puis un deuxième bossage 32, et une partie décroissante 64. Le profil latéral 61 est symétrique par rapport à la position centrale point mort du profil de billage 30 au niveau de laquelle la bille de guidage évolue lors des mouvements de sélection. Les deux bossages 31 et 32 sont donc disposés de part et d'autre de cette position centrale. Les bossages 3 et 32, puis les ruptures de pente dans les parties 62 et 64 permettent de ressentir l'engagement d'une vitesse.

Ainsi, dans l'invention, on propose un système de billage multifonction de boîte de vitesses pour véhicules automobiles intégrant notamment une fonction de passage de vitesse, une fonction sélection de vitesse selon une loi course/effort déterminée, et aussi une fonction d'amélioration de guidage qui ne nécessite pas l'utilisation d'un système de grille séparé. A cet effet, on prévoit donc, dans l'invention de réaliser un profil de billage intégrant les trois fonctions citées ci-dessus, c'est-à-dire :
- fonction de passage de vitesse ;
- fonction de sélection de vitesse ;
- fonction de d'amélioration de guidage.

Les autres avantages de l'invention sont notamment les suivants :
- amélioration de l'agrément en fin de course par l'apport d'une fonction grille sur le profil de billage ;
- diminution du jeu en sélection ressenti par le conducteur par rapport à une grille classique ;
- suppression des efforts radiaux sur la douille de billage, ce qui permet d'améliorer la durée de vie du système de billage ;
- simplification de fabrication du doigt de passage avec la suppression des systèmes passages/sélections, et grille séparés.

## Revendications

1. Système de billage multifonction de boîte de vitesses pour véhicule automobile, ledit système de billage comportant notamment :
- un profil de billage (30) déterminant une loi course/effort lors d'une opération de sélection ou lors d'une opération de passage d'une vitesse, comportant un profil principal en V (33) apte à remplir une fonction de rappel du profil de billage (30) ayant effectué un mouvement de sélection, et comportant en outre un profil secondaire guidant les mouvements du profil de billage (30) lors des mouvements de passages de vitesses, ledit profil secondaire présentant au moins un couloir de passage de vitesse (40 ; 41 ; 42 ; 43 ; 44 ; 45 ; 46) sensiblement perpendiculaire à la direction du mouvement de sélection, et présentant au moins une zone protubérante (34 ; 35 ; 36 ; 37 ; 38) longeant chaque couloir de passage de vitesse (40 ; 41 ; 42 ; 43 ; 44 ; 45 ; 46) ;
- une douille de billage (20), comprenant un corps fixe et une bille de guidage, le profil de billage (30) évoluant sous la bille de guidage en subissant une pression lors du passage ou de la sélection d'une vitesse ;
- **caractérisé en ce que** chaque zone protubérante (34 ; 35 ; 36 ; 37 ; 38) présente un flanc extérieur (39) dont la pente est équivalente à la pente d'un flanc du profil principal en V (33), ledit flanc du profil principal en V (33) ne supportant pas la zone protubérante considérée.

2. Système de billage selon la revendication 1 **caractérisé en ce que** la forme du profil principal en V (33) du profil de billage (30) est sensiblement conservée pour toute coupe du profil secondaire et est sensiblement perpendiculaire à la direction du mouvement de passage.

3. Système de billage selon l'une des revendications 1 et 2, **caractérisé en ce que** le profil de billage (30) présente un profil latéral (61) comportant un premier bossage (31) et un deuxième bossage (32) disposé de part et d'autre d'une zone centrale du profil de billage (30) au niveau de laquelle la bille de guidage évolue lors des mouvements de sélection.

4. Système de billage selon l'une des revendications 1 à 3, **caractérisé en ce que** pour plusieurs vitesses passées, la bille de guidage de la douille de billage (20) est positionnée dans un des couloirs de passage de vitesse (40 ; 41 ; 42 ; 43 ; 44 ; 45 ; 46), ledit couloir (40 ; 41 ; 42 ; 43 ; 44 ; 45 ; 46) étant entouré de deux zones protubérantes (34 ; 35 ; 36 ; 37 ; 38).

5. Système de billage selon l'une des revendications 1 à 4 **caractérisé en ce que** les zones protubérantes (34 ; 35 ; 36 ; 37 ; 38) apparaissent progressivement, en considérant le sens du mouvement de passage, sur le profil de billage (30).
